# EUROPEAN PATENT APPLICATION

(11) **EP 3 046 316 A1**
(43) Date of publication of application: **20.07.2016**
(21) Application number: 15200634.2
(22) Date of filing: 17.12.2015
(51) Int. Cl.: H04N 1/41, G06F 3/12

(54) **IMAGE FORMING APPARATUS, IMAGE FORMING SYSTEM, AND IMAGE FORMING METHOD**

(30) Priority: 13.01.2015 JP 2015003994
(71) Applicant: Konica Minolta, Inc., Tokyo 100-7015 (JP)
(72) Inventor: KAMEI, Syunji, Tokyo, 100-7015 (JP)
(74) Representative: Gille Hrabal

(57) **Abstract**

An image forming unit that forms an image based on image data; and a control unit that manages the image data, wherein the control unit prepares a common master attribute in at least part of pages, for part or all of attribute data in the image data of each page, and enables to use the master attribute and to use image data excluding individual attribute data according to the master attribute, in pages corresponding to the master attribute.

## Description

### CROSS-REFERENCE TO RELATED APPLICATIONS

The present application claims priority under 35 U.S.C. §119 to Japanese Patent Application No.2015-003994, filed January 13, 2015. The contents of this application are incorporated herein by reference in their entirety.

### BACKGROUND OF THE INVENTION

### Field of the Invention

The present invention relates to an image forming apparatus, an image forming system, and an image forming method for forming an image based on image data.

### Description of the Related Art

In an image forming apparatus and an image forming system that form an image based on image data, input image data is temporarily stored in an HDD in many cases in a machine with a large number of retained sheets, such as a commercial printing machine, and HDD access is a bottleneck of the system. Therefore, to realize a high-speed system, a high-speed HDD or a plurality of HDDs are used to attain the performance. To reduce the increasing hardware resources, a system for reducing the load on the HDD is proposed, in which page data is categorized into master data common to each page and variable data different in each page, the master data is read only once from the HDD and saved in a memory, and only the variable data is read from the HDD for each page. For example, in Japanese Patent Laid-Open No. 2004-78413, to process print data including master data and variable data more efficiently and faster than in the past, whether the created master data can be used for the next output is determined. The master data is used if the master data can be used, and a new form is registered if the master data cannot be used.

However, although the image data is sorted in the conventional technique, elements included in the image data are not taken into account, and the load is not sufficiently reduced.

The image data is categorized into color data indicating colors and attribute data indicating attribute information of the colors. The attribute data, such as a text, a graphic, and an image, is information with fewer changes than the color data, and the attribute is often common even in a variable area. For example, when photographs are variable as the photographs are replaced in each page, the color data is different in each page, the attribute data "image" is common in all pages.

The present invention has been made in view of the circumstances, and an object of the present invention is to provide an image forming apparatus, an image forming system, and an image forming method that can more efficiently process image data to reduce the load on hardware.

### SUMMARY OF THE INVENTION

To achieve at least one of the abovementioned objects, an image forming apparatus reflecting one aspect of the present invention includes:
an image forming unit that forms an image based on image data; and
a control unit that manages the image data, wherein
the control unit prepares a common master attribute in at least part of pages, for part or all of attribute data in the image data of each page, and enables to use the master attribute and to use image data excluding individual attribute data according to the master attribute, in pages corresponding to the master attribute.

In the image forming apparatus according to the abovementioned aspect, it is preferable that,
when the attribute data is different in each page, the control unit generates a predetermined attribute master and handles the generated attribute master as the master attribute.

In the image forming apparatus according to the abovementioned aspect, it is preferable that
the control unit handles the attribute data of a first page as the master attribute.

In the image forming apparatus according to the abovementioned aspect, it is preferable that
the control unit makes the master attribute correspond to all pages in a same job.

In the image forming apparatus according to the abovementioned aspect, it is preferable that
a use information field of the master attribute is provided in header information corresponding to the image data.

In the image forming apparatus according to the abovementioned aspect, it is preferable that
when an image quality priority mode is selected in a job in which one of a performance priority mode and the image quality priority mode is set, the control unit handles common attribute data with a highest frequency of use among the attribute data of all pages as the master attribute, and for a page with attribute data different from the master attribute, the control unit uses individual attribute data of the relevant page.

In the image forming apparatus according to the abovementioned aspect, it is preferable that
when the performance priority mode is selected in a job in which one of the performance priority mode and the image quality priority mode is set, the control unit sets a predetermined common attribute for the attribute data of all pages and handles the predetermined common attribute as the master attribute if the attribute data includes a text attribute.

In the image forming apparatus according to the abovementioned aspect, it is preferable that
the control unit sets a graphic attribute as the common attribute.

In the image forming apparatus according to the abovementioned aspect, it is preferable that
the attribute data is one of graphics, images, and texts.

In the image forming apparatus according to the abovementioned aspect, it is preferable that
a storage unit that stores the master attribute, the image data excluding the individual attribute data according to the master attribute, and the individual attribute data if the individual attribute data not corresponding to the master attribute is included.

In the image forming apparatus according to the abovementioned aspect, it is preferable that
when a job includes pages with same attribute data, the control unit changes a page order such that the pages with the same attribute data become continuous pages.

In the image forming apparatus according to the abovementioned aspect, it is preferable that
when a plurality of image forming apparatuses are used to apply the image data to a parallel tandem output, the control unit generates a job such that a request for printing pages with same attribute data is issued to a same image forming apparatus.

In the image forming apparatus according to the abovementioned aspect, it is preferable that
the image data includes a master area and a variable area, and the attribute data belongs to the variable area.

In the image forming apparatus according to the abovementioned aspect, it is preferable that
the control unit makes the master area of the image data common, sets the image data of the variable area by excluding the master area, prepares a common master attribute for the image data of the variable area in at least part of the pages, for part or all of the attribute data in the image data of each page, incorporates the common master attribute into the attribute in the master area, and enables to use the master attribute and to use the image data excluding the individual attribute data according to the master attribute, in pages corresponding to the master attribute.

To achieve at least one of the abovementioned objects, an image forming system reflecting one aspect of the present invention includes:
an image forming unit that forms an image based on image data; and
a control unit that manages the image data, wherein
the control unit prepares a common master attribute in at least part of pages, for part or all of attribute data in the image data of each page, and enables to use the master attribute and to use image data excluding individual attribute data according to the master attribute, in pages corresponding to the master attribute.

To achieve at least one of the abovementioned objects, an image forming method of an image forming apparatus or an image forming system that forms an image based on image data reflecting one aspect of the present invention includes:
a step of preparing a common master attribute in at least part of pages, for part or all of attribute data in the image data of each page; and
a step of providing the master attribute and image data excluding individual attribute data according to the master attribute, in pages corresponding to the master attribute.

### BRIEF DESCRIPTION OF THE DRAWINGS

FIG. 1 is a diagram showing control blocks of an image forming apparatus and an image forming system according to an embodiment of the present invention;
FIG. 2 is a diagram describing an outline of color data and attribute data in image data according to the embodiment of the present invention;
FIG. 3 is a diagram showing a page of a job with a plurality of pixel areas according to the embodiment of the present invention;
FIG. 4 is a flow chart showing a control procedure of a controller side that processes the image data according to the embodiment of the present invention;
FIG. 5 is a diagram showing an outline of an example in which attribute data is generated and handled as a master attribute according to the embodiment of the present invention;
FIG. 6 is a flow chart showing a control procedure of a main body control side that prints the image data according to the embodiment of the present invention;
FIG. 7 is a diagram showing an example of attribute data of a page order according to the embodiment of the present invention;
FIG. 8 is a diagram showing an example in which the page order is changed such that the attribute data is continuous according to the embodiment of the present invention;
FIG. 9 is a flow chart showing a control procedure of changing the page order such that the attribute data is continuous according to the embodiment of the present invention;
FIG. 10 is a flow chart showing a control procedure of the main body control side that prints the image data in which the page order is changed such that the attribute data is continuous according to the embodiment of the present invention;
FIG. 11 is a diagram showing an example of attribute data of the page order according to the embodiment of the present invention; and
FIG. 12 is a diagram describing an example of parallel tandem processing in which the page order is changed such that the attribute data is continuous, and destinations are the same, according to the embodiment of the present invention.

### DETAILED DESCRIPTION OF THE PREFERRED EMBODIMENT

An embodiment of the present invention will now be described with reference to the attached drawings.

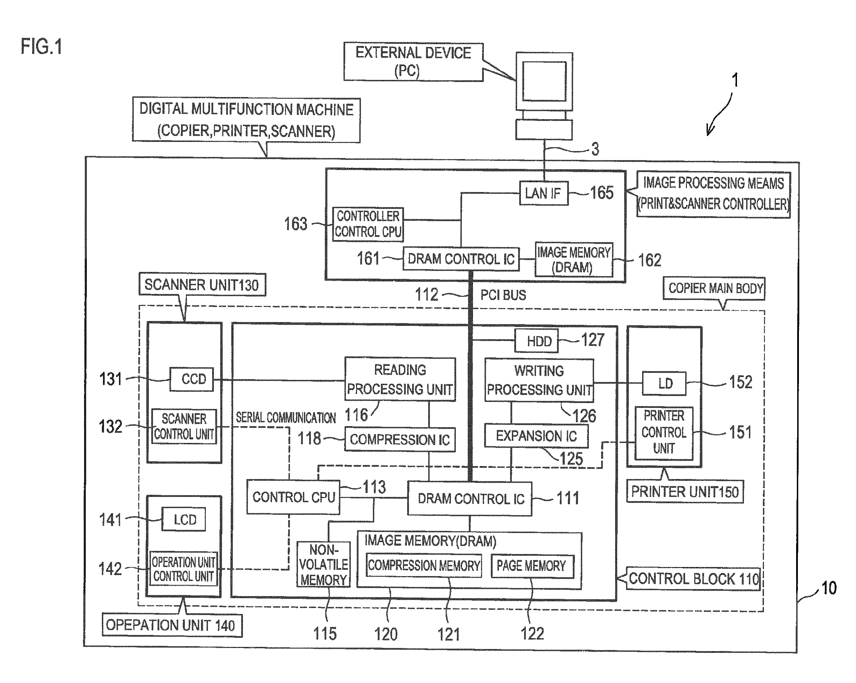

Functions of an image forming apparatus and an image forming system of the present invention will be described with reference to a block diagram of FIG. 1.

Main components of the image forming apparatus 10 include: a copier main body including a control block 110, a scanner unit 130, an operation unit 140, and a printer unit 150; and an image processing unit (print & scanner controller) 160 that processes image data input to and output from an external device (for example, PC or server) through a LAN. The image forming apparatus 10 can include a post-processing apparatus. The image forming apparatus 10 can also be combined with other post-processing apparatuses or external devices to form an image forming system 1.

The control block 110 includes a PCI bus 112, and the PCI bus 112 is connected to a DRAM control IC 111 in the control block 110. The control block 110 also includes a control CPU 113, and the DRAM control IC 111 is connected to the control CPU 113. A non-volatile memory 115 is connected to the control CPU 113. The non-volatile memory 115 stores programs for operating the control CPU 113, setting data of the image forming apparatus, process control parameters, and the like.

The control CPU 113 includes a RAM and a ROM and is configured to control the entire image forming system 1 and to figure out the state of the entire image forming apparatus. The control CPU 113 also controls conveyance of a transfer medium and formation of an image. Although the control CPU 113 is installed in a housing of the image forming apparatus in the description of the embodiment, part or all of the functions of the control CPU 113 can be included outside of the housing of the image forming apparatus.

The scanner unit 130 includes: a CCD 131 that performs optical reading; and a scanner control unit 132 that controls the entire scanner unit 130. The scanner control unit 132 is connected to the control CPU 113 in a manner that serial communication is possible, and the control CPU 113 controls the scanner control unit 132. The scanner control unit 132 can include a CPU, a program for operating the CPU, and the like. A reading processing unit 116 applies data processing to image data read by the CCD 131.

The operation unit 140 includes a touch-panel LCD 141 and an operation unit control unit 142. The LCD 141 and the operation unit control unit 142 are connected, and the operation unit control unit 142 and the control CPU 113 are connected in a manner that serial communication is possible. The control CPU 113 controls the operation unit 140 according to the configuration. The operation unit control unit 142 can include a CPU, a program for operating the CPU, and the like. Operation control conditions, such as settings and operation commands in the image forming apparatus and the image forming system, can be input in the operation unit 140, and the operation unit 140 can also display details of setting, state of machine, information, and the like. The control CPU 113 controls the operation unit 140. The operation unit 140 enables predetermined operation and the like. Various displays are possible in the operation unit 140 as described above.

The DRAM control IC 111 is connected to an image memory (DRAM) 120 including a compression memory 121 and a page memory 122. Image data acquired by the scanner unit 130 and image data acquired through a LAN 3 are stored in the image memory (DRAM) 120. As described, the image memory is a storage area of image data, and image data of a job to be printed is stored. The DRAM control IC 111 can store image data related to a plurality of jobs in the image memory. Therefore, image data of reserved jobs can also be stored in the image memory.

An HDD 127 is connected to the PCI bus 112, and various data can be stored and read.

A compression IC 118 that compresses image data and an expansion IC 125 that expands compressed image data are connected to the DRAM control IC 111. A writing processing unit 126 is connected to the expansion IC 125. The writing processing unit 126 is connected to an LD 152 of the printer unit 150 and is configured to process data used for the operation of the LD 152. The printer unit 150 includes a printer control unit 151 that controls the entire printer unit 150, and the printer control unit 151 is connected to and controlled by the control CPU 113. More specifically, the printer control unit 151 starts and stops print operation according to parameters provided from the control CPU 113.

A DRAM control IC 161 of the image processing unit (print & scanner controller) 160 is connected to the PCI bus 112 connected to the DRAM control IC 111. An image memory 162 is connected to the DRAM control IC 161 in the image processing unit (print & scanner controller) 160. In the image processing unit (print & scanner controller) 160, a controller control CPU 163 is connected to the DRAM control IC 161, and a LAN interface 165 is connected to the DRAM control IC 161. The LAN interface 165 is connected to the LAN 3.

The controller control CPU 163 can receive image data from the outside to apply RIP processing and the like and can manage the image data. Therefore, at least the controller control CPU 163 functions as a control unit of the present invention.

An external apparatus or the like placed outside of the image forming apparatus 10 can manage the images, and the external apparatus can be connected to the image forming apparatus 10 through a network to manage the images. The control CPU 113 can also manage the images and control the image formation, and the control unit of the present invention can be formed only by the control CPU 113 or along with the controller control CPU 163.

An external device 2 (PC) is connected to the LAN 3, and the image forming system 1 can include the external device 2. The external device 2 can control the image forming system 1 and manage the image data to function as the control unit of the present invention.

Basic operation of the image forming system 1 will be described.

First, a procedure of accumulating image data in the image forming apparatus 10 will be described.

When the scanner unit 130 reads an image of a document to generate image data, the CCD 131 in the scanner unit 130 optically reads the image of the document from the document. In this case, the scanner control unit 132 that receives a command from the control CPU 113 controls the operation of the CCD 131. The reading processing unit 116 applies data processing to the image read by the CCD 131, and the processed image data is compressed by the compression IC 118 by a predetermined method and stored in the compression memory 121 through the DRAM control IC 111. The control CPU 113 can manage, as a job, the image data stored in the compression memory 121. After the image data is stored in the image memory (DRAM) 120, the image data can be stored in the HDD 127.

Print conditions and the like can be set in the operation unit 140. For example, information of print conditions (print mode, quality mode setting, master attribute setting, and attribute data change) and the like set on the operation unit 140 is transmitted to the control CPU 113, and the control CPU 113 creates setting information. The created setting information is stored in the RAM in the control CPU 113.

When image data is acquired from the outside, the controller control CPU 163 controls the DRAM control IC 161 to store image data, such as image data transmitted from the external device 2 through the LAN 3, in the image memory 162 through the LAN interface 165. The data of the image memory 162 is temporarily stored in the page memory 122 through the DRAM control IC 161, the PCI bus 112, and the DRAM control IC 111. The data stored in the page memory 122 is sequentially transmitted to the compression IC 118 through the DRAM control IC 111, and compression processing is applied to the data. The data is stored in the compression memory 121 through the DRAM control IC 111, and the control CPU 113 manages the data as described above. The image data stored in the compression memory 121 can be stored in the HDD 127 through the DRAM control IC 111. The image memory (DRAM) 120 and the HDD 127 can be used as a storage unit of the present invention.

When the image forming apparatus outputs an image, that is, when the image forming apparatus is used as a copying machine or a printer, the image data stored in the compression memory 121 is transmitted to the expansion IC 125 through the DRAM control IC 111 to expand the data. The expanded data is transmitted to the writing processing unit 126, and the data is written in each photoreceptor in the LD 152.

When the image data is stored in the HDD 127, the image data is temporarily stored in the compression memory 121 through the DRAM control IC 111, and the process as described above is applied.

When an image includes a master area and a master attribute in reading the image, common data of the master area and the master attribute can be read and applied to each page in a variable area.

Although an image can be output based on the details of the setting of the operation unit 140 as described above, details of control can be received from the external device 2 or the like. For example, details of control, such as print conditions, can be received based on a printer driver in the external device 2. Like the image data, the DRAM control IC 161 stores the print conditions and the like in the image memory 162 through the LAN interface 165. The data of the image memory 162 is stored in the page memory 122 through the DRAM control IC 161, the PCI bus 112, and the DRAM control IC 111.

In the printer unit 150, the printer control unit 151 that has received a command of the control CPU 113 controls each component. In the image forming unit, the LD 152 forms a latent image on a photoreceptor based on the image data, and a written toner image is transferred to a sheet supplied by a conveyance path. A fixing unit fixes the toner image.

The image data for forming an image can include a master area and a variable area. The efficiency of handling the image data is improved by handling the master area as common data and handling the variable area individually.

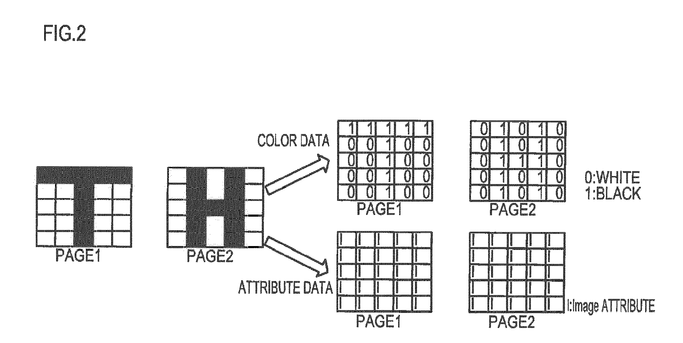

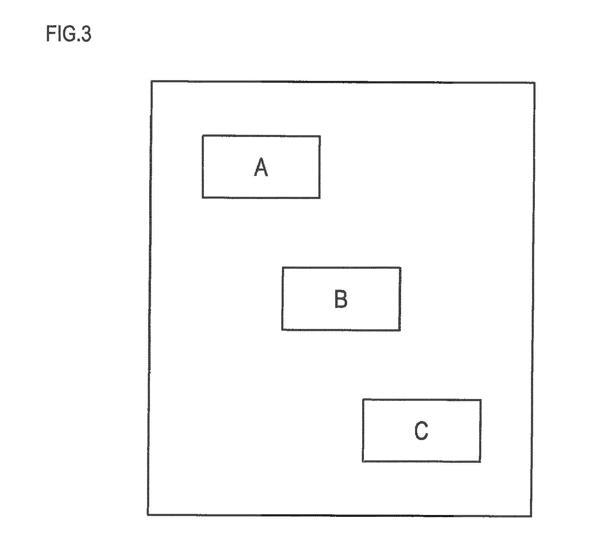

The image data in the variable area includes color data indicating colors and attribute data indicating attribute information as illustrated in FIG. 2. In this mode, the color data indicates black and white data corresponding to pixels. For colors, color data of each color is indicated by 0, 1, or the like. Meanwhile, the attribute data indicates that the pixels in the relevant pixel groups are image data (indicated by I). The pixel groups can indicate entire pages. When each page includes a plurality of pixel groups as illustrated in FIG. 3 (for example, areas A, B, and C), each pixel group can include a master area, color data, and attribute data, and each pixel group can have different attribute data.

Even when attribute masters are different, a predetermined attribute master, such as little influence on image quality, can be used to share the attribute master. For example, the predetermined attribute master can be set in advance, and the master attribute can be generated based on the setting. A user may be able to designate the predetermined attribute master at appropriate time. An example of the predetermined attribute mater includes an attribute master with little influence on the quality.

In a mode described below, the controller control CPU 163 manages images, and the control CPU 113 forms images.

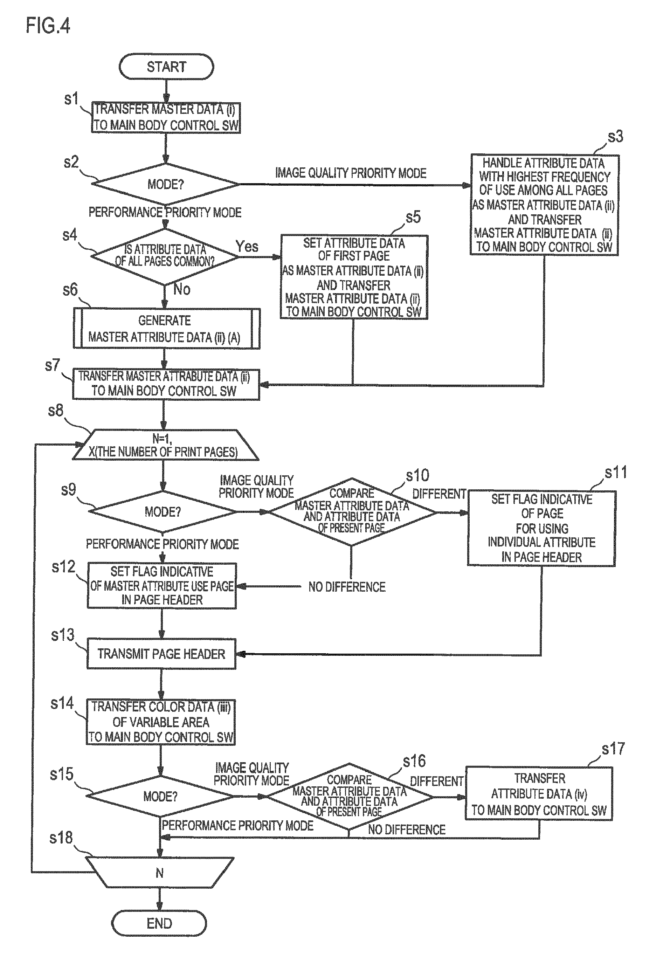

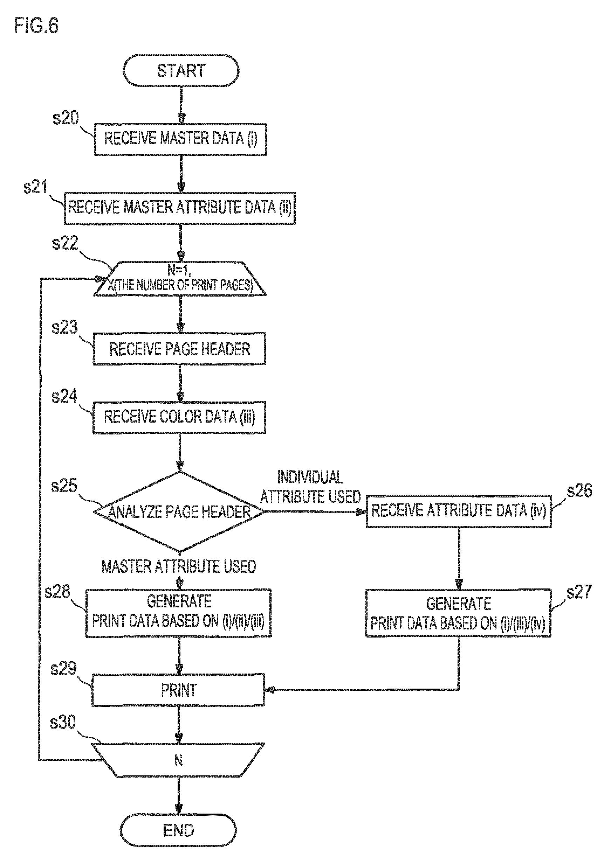

FIG. 4 shows a flow chart of a procedure of the controller control CPU 163 side (hereinafter, "controller"), and FIG. 6 shows a flow chart of a procedure of the control CPU 113 side (hereinafter, "main body control SW").

First, the procedure by the controller control CPU 163 (hereinafter, simply "controller") will be described.

The controller that has received image data including a master area and a variable area from the external device 2 or the like transfers data (i) of the master area to the main body control SW (step s1). The controller then determines whether the mode is an image quality priority mode or a performance priority mode (step s2). The quality can be set in the external device 2 or the like that has transmitted the image data, and the setting is added to header information or the like of the job. The quality may be able to be set through the operation unit 140 of the image forming apparatus 10. The image quality priority mode is a mode for putting more emphasis on the quality and increasing the efficiency as much as possible. The performance priority mode is a mode for putting more emphasis on the efficiency than the quality.

If the image quality priority mode is selected (step s2, image quality priority mode), attribute data with a highest frequency of use among all pages is handled as master attribute data (ii) and transferred to the main body control SW (step s3). The process moves to step s7 of transferring the master attribute data (ii) to the main body control SW.

If the mode is the performance priority mode (step s2, performance priority mode), whether attribute data of all pages in variable data is common is analyzed (step s4). If the attribute data of all pages is common (step s4, Yes), the attribute data of a first page is handled as the master attribute (ii) and transferred to the main body control SW (step s5). The process then moves to step s7.

If the attribute data of all pages is not common (step s4, No), the master attribute data (ii) is generated with the following content (step s6), and the generated master attribute data (ii) is transmitted to the main body control SW (step s7).

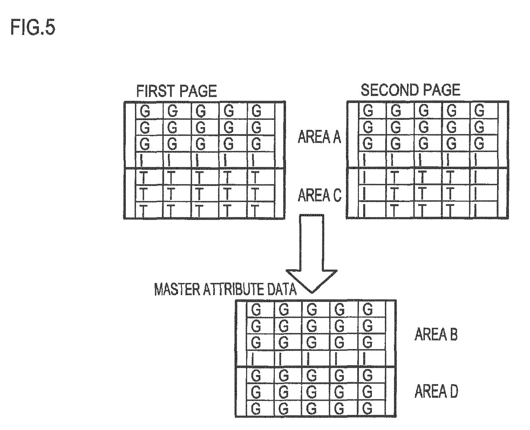

In step s6, all pages are searched, and a common attribute area (area A) is extracted as shown in FIG. 5 and is incorporated into the master attribute without changing the attribute information. In this mode, the area A is in the master area. An area C (variable area in this mode) indicating a difference is an area including a Text attribute. In this case, the attribute varies only in the part including the text. The other areas are image areas. The area including the text attribute is incorporated as a graphic attribute into the master attribute data (ii) as shown in FIG. 5 (area D).

Although the master attribute in the master area and the master attribute in the variable area are incorporated and transferred to the main body control SW in this mode, the master attributes can be individually transferred without incorporating the master attributes. However, the management is facilitated by incorporating the master attributes, and the load on the hardware is further reduced.

The following procedure is sequentially executed for all pages in the page order (1 to X pages) (step s8).

First, whether the mode is the image quality priority mode or the performance priority mode is determined (step s9).

If the image quality priority mode is selected (step s9, image quality priority mode), the master attribute data and the attribute data of the present page are compared (s10). If there is no difference (step s10, no difference), a flag indicative of a master attribute use page is set in the page header (step s12). If there is a difference (step s10, different), a flag indicative of a page for using an individual attribute is set in the page header. The process moves to step s13 of transmitting the page header.

In the mode determination (step s9), if the performance priority mode is set (step s9, performance priority mode), a flag indicative of the master attribute use page is set in the page header (step s12), and the page header is transmitted in step s13.

After step s13, color data (iii) of the variable area is transferred to the main body control SW (step s14), and the mode is determined (step s15).

In the image quality priority mode (step s15, image quality priority mode), the master attribute data and the attribute data of the present page are compared (step s16). If there is a difference (step s16, different), attribute data (iv) is transferred to the main body control SW (step s17), and the process moves to the next page if the page is not the X page (step s18). If there is no difference (step s16, no difference), the process moves to the next page if the page is not the X page (step s18).

In the mode determination (step s15), if the performance priority mode is selected (step s15, performance priority mode), the process moves to the next page if the page is not the X page (step s18).

In step s18, the process ends if the page is the final print page X.

When the data is transferred to the main body control SW, the data can be temporarily stored in the HDD 127 that is a storage unit in the main body control SW, and the data can be read out to use the data to form the image when necessary.

The procedure by the control CPU 113 (hereinafter, simply "main body control SW") will be described with reference to the flow chart of FIG. 6.

The master data (i) transmitted from the controller is received (step s20), and the master attribute data (ii) is received (step s21). The control CPU 113 can receive the data from the HDD 127 at the start of the image formation.

The following procedure is executed for all pages in the page order (step s22). The page header is received (step s23), and the color data (iii) is received (step s24). The page header is then analyzed (step s25). If the individual attribute is used (step s25, individual attribute used), the attribute data (iv) is received (step s26), print data is generated based on the master data (i), the color data (iii), and the attribute data (iv) (step s27), and printing is executed (step s29).

If the master attribute is used as a result of the analysis of the page header (step s25, master attribute used), print data is generated based on the master data (i), the master attribute data (ii), and the color data (iii) (step s28), and printing is executed (step s29).

After the printing is executed, the process moves to step s22 if the page is not the final print page X, and the procedure is repeated. The process ends if the page is the final print page X (step s30).

Although one page includes one attribute data in the description above, one page can include a plurality of pixel areas, and each area can include individual attribute data. In this case, the procedure can be performed for each pixel area, and the master attribute can be shared. Therefore, the pages corresponding to the master attribute can be different in each pixel area. When the attribute data is common in different pixel areas, the master attribute can be mutually incorporated to execute the process.

Furthermore, the page order can be changed, and the master attribute data can be used multiple times to further increase the efficiency of the HDD access.

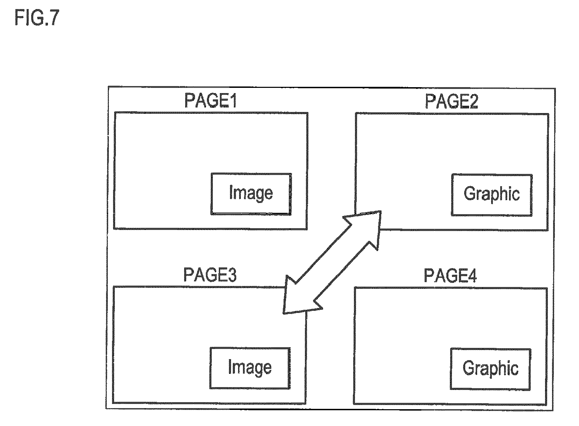

FIG. 7 schematically shows attribute data of each page. Rectangular areas indicate variable areas. In this mode, a first page and a third page include a common image attribute, and a second page and a fourth page include a common graphic attribute. However, the attribute changes every time the page changes in this page order.

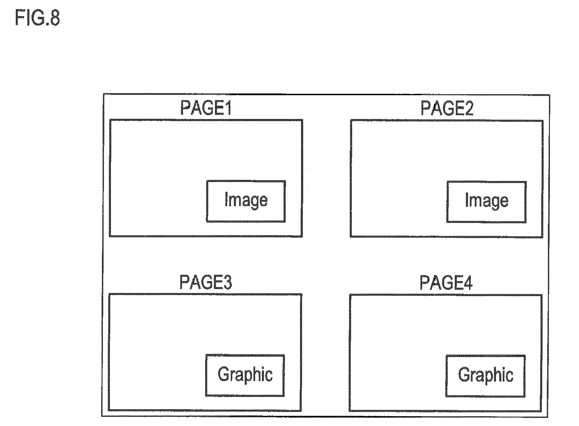

FIG. 8 schematically shows attribute data of each page, and rectangular areas indicate variable areas. The page order is changed, and the attribute data of image area is continuous in the first page and the second page. The attribute data of graphic area is continuous in the third page and the fourth page.

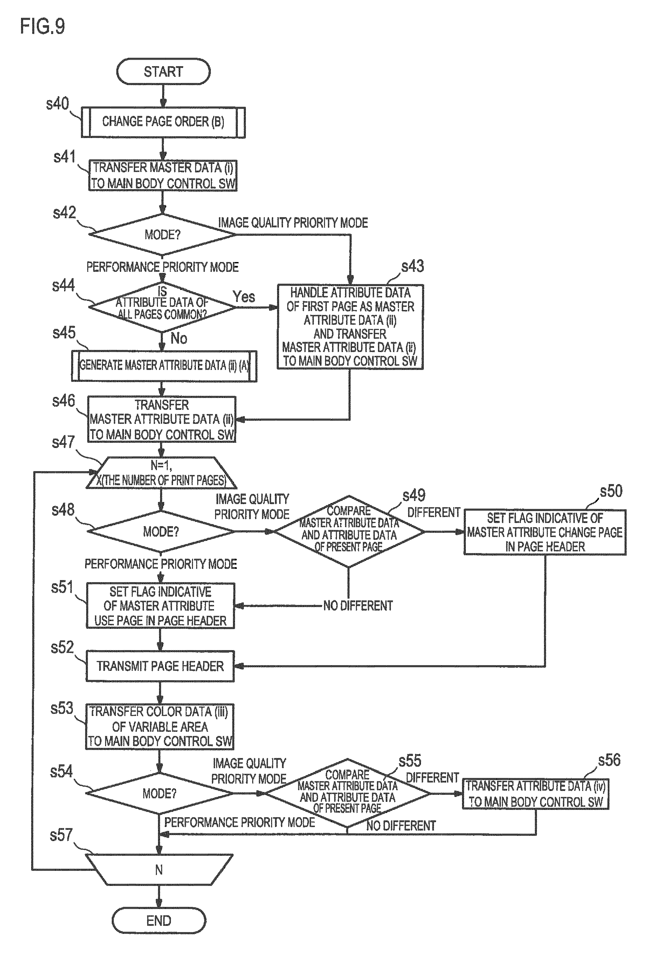

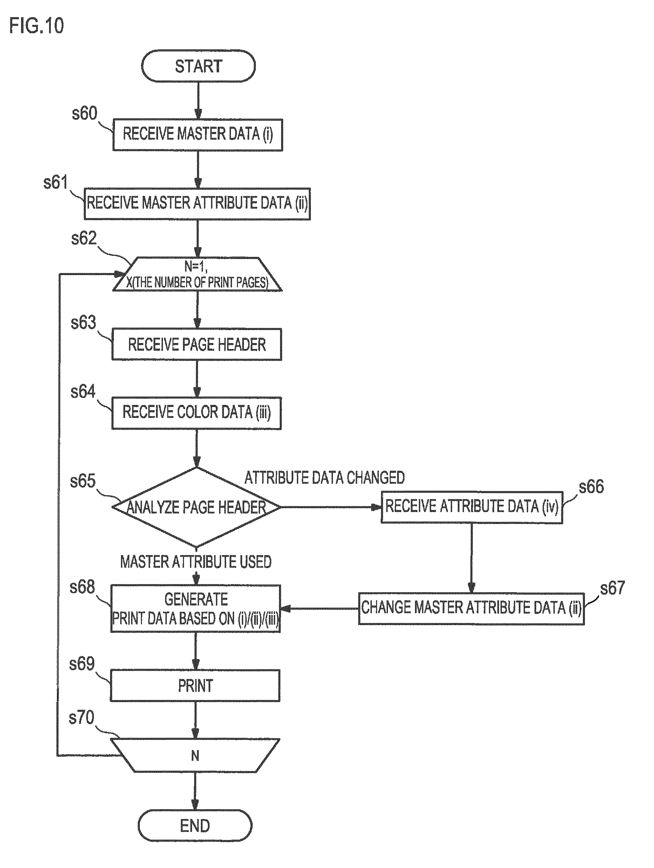

FIG. 9 shows a controller control flow when the page order is changed, and FIG. 10 shows a main body control flow.

In this procedure, all pages are analyzed, and the page order is changed such that the same attribute data is included in continuous pages in the variable areas.

A page order changing process B is started (step s40), and the master data (i) is transmitted to the main body control SW (step s41).

Whether the mode is the performance priority mode or the image quality priority mode is checked (step s42). In the image quality priority mode (step s42, image quality priority mode), the attribute data of the first page is handled as the master attribute data (ii) and transferred to the main body control SW (step s43), and the master attribute data (ii) is transferred to the main body control SW (step s46).

The attribute data of the first page that tends to be common attribute data is handled as the master attribute, and the time required to inspect the attribute data in the image data of each page can be reduced.

If the mode is the performance priority mode (step s42, performance priority mode), whether the attribute data of all pages is common is determined (step s44).

If the attribute data of all pages is common (step s44, Yes), the process moves to step s43. The attribute data of the first page is handled as the master attribute data (ii) and transferred to the main body control SW, and the process moves to step s46.

If the attribute data is not common in all pages (step s44, No), the master attribute data (ii) is generated (A), and the master attribute data (ii) is transferred to the main body control SW in step s46.

After step s46, the following procedure is executed for all pages in the page order (1 to X pages) (step s47).

First, whether the mode is the image quality priority mode or the performance priority mode is determined (step s48).

If the image quality priority mode is selected (step s48, image quality priority mode), the master attribute data and the attribute data of the present page are compared (step s49). If there is no difference (step s49, no difference), a flag indicative of a master attribute use page is set in the page header (step s51), and the page header is transmitted (step s52).

If there is a difference (step s49, different), a flag indicative of a master attribute change page is set in the page header (step s50), and the page header is transmitted (step s52).

In the mode determination (step 48), if the performance priority mode is set (step s48, performance priority mode), a flag indicative of a master attribute use page is set in the page header (step s51), and the page header is transmitted (step s52).

After the transmission of the page header in step s52, the color data (iii) of the variable area is transferred to the main body control SW (step s53), and the mode is determined (step s54).

If the mode is the image quality priority mode in the mode determination (step s54, image quality priority mode), the master attribute data and the attribute data of the present page are compared (step s55). If there is a difference (step s55, different), the attribute data (iv) is transferred to the main body control SW (step s56), and the process moves to the next page if the page is not the X page (step s57). If there is no difference (step s55, no difference), the process moves to the next page if the page is not the X page (step s57).

If the performance priority mode is selected in the mode determination (step s54, performance priority mode), the process moves to the next page if the page is not the X page (step s57).

The process ends if the page is the final print page X in step s57.

When the data is transferred to the main body control SW, the data can be temporarily stored in the HDD 127 that is a storage unit in the main body control SW, and the data can be read out to use the data to form the image when necessary.

The procedure by the control CPU 113 (hereinafter, simply "main body control SW") will be described with reference to the flow chart of FIG. 10.

The master data (i) transmitted from the controller is received (step s60), and the master attribute data (ii) is received (step s61). The control CPU 113 can receive the data from the HDD 127 at the start of the image formation.

The following procedure is executed for all pages in the page order (step s62).

The page header is received (step s63), and the color data (iii) is received (step s64). The page header is then analyzed (step s65). If the attribute data is changed (step s65, attribute data changed), the attribute data (iv) is received (step s66), the master attribute data (ii) is changed (step s67), print data is generated based on the master data (i), the master attribute data (ii), and the color data (iii) (step s68), and printing is executed (step s69).

If the master attribute is used as a result of the analysis of the page header (step s65, master attribute used), print data is generated based on the master data (i), master attribute data (ii), and the color data (iii) (step s68), and printing is executed (step s69).

After the printing is executed (step s69), the process moves to step s62 if the page is not the final print page X, and the procedure is repeated. The process ends if the page is the final print page X (step s70).

When a job with a changed page order is applied to a parallel tandem, the job can be generated such that the same printer prints the pages with the same attribute data. In this way, reading of the attribute data can be efficient in all printers.

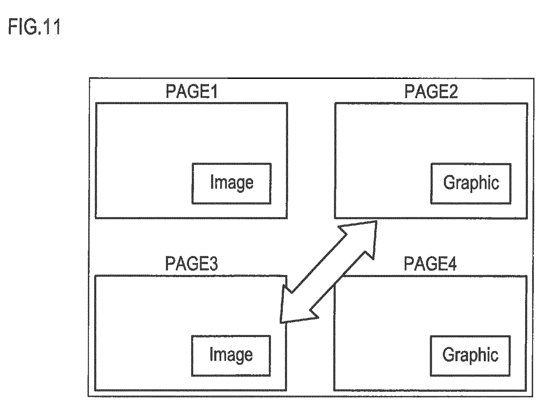

FIG. 11 shows a state before the page order of the variable areas indicated by rectangles is changed. In this mode, a first mode and a third mode include a common image attribute, and a second page and a fourth page include a common graphic attribute. However, the attribute changes every time the page changes in this page order.

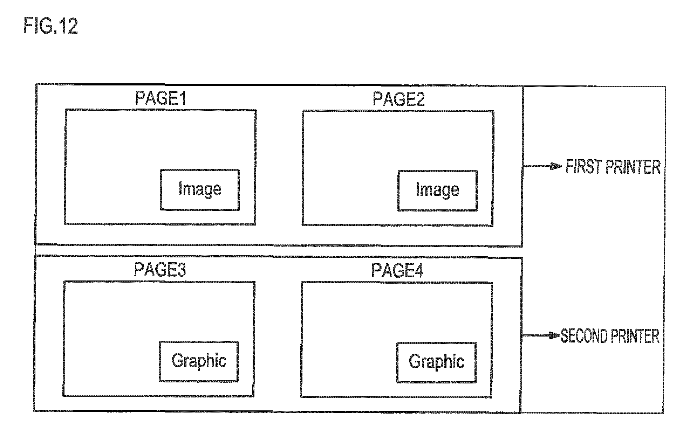

The page order is switched in FIG. 12, and FIG. 12 schematically illustrates the attribute data of each page and designation of printers, i.e. image forming apparatuses, that print the pages. The page order is changed, and the attribute data of image area is continuous in the first page and the second page. The attribute data of graphic area is continuous in the third page and the fourth page. In this embodiment, the first page and the second page include the same attribute data (Image), and a print instruction is issued to a first printer. The third page and the fourth page include the same attribute data (Graphic), and a print instruction is issued to a second printer.

Although the master attribute is prepared for the image data including the master area and the variable area in the description of the modes, the image data to be processed in the present invention is not limited to the image data including the master area and the variable area.

As described, according to the present embodiment, the attribute data can be shared to efficiently handle the image data. The load on the HDD and the like can be minimized, and the system can be constructed by few hardware resources.

According to the present invention, the control unit can make the master attribute correspond to all pages in the same job. As a result, the master attribute corresponds to all pages in the job, and the efficiency can be maximized.

In the present embodiment, the use information field of the master attribute is provided in the header information corresponding to the image data. As a result, the use information of the master attribute can be provided to the job header or the page header, and the master attribute can be easily used.

In the present embodiment, when the image quality priority mode is selected in a job in which one of the performance priority mode and the image quality priority mode is set, the control unit handles common attribute data with a highest frequency of use among the attribute data of all pages as the master attribute, and for a page with attribute data different from the master attribute, the control unit uses the individual attribute data of the page. As a result, the attribute data with a high frequency of use can be handled as the master attribute and used in the relevant page in the image quality priority mode, and the individual attribute data is used in a page with attribute data different from the master attribute. In this way, the image can be formed and printed with the attribute as in the setting, and the image quality is maintained as in the setting.

In the present embodiment, when the performance priority mode is selected in a job in which one of the performance priority mode and the image quality priority mode is set, the control unit sets a predetermined common attribute for the attribute data of all pages and handles the predetermined common attribute as the master attribute if the attribute data includes a text attribute. As a result, the common attribute data is set for the attribute data of all pages handled as the master attribute if the attribute data includes the text attribute in the performance priority mode. In this way, the efficiency can be significantly improved.

In the present embodiment, the control unit sets a graphic attribute as the common attribute. As a result, the graphic attribute that can be easily shared and that does not affect the quality much can be shared and handled as the master attribute.

In the present embodiment, the attribute data is one of graphics, images, and texts. As a result, general graphics, images, or texts are indicated as the attribute data.

The present embodiment includes the storage unit that stores the master attribute, the image data excluding the individual attribute data according to the master attribute, and the individual attribute data if the individual attribute data not corresponding to the master attribute is included. As a result, the master attribute, the image data excluding the individual attribute data according to the master attribute, and the individual attribute data not corresponding to the master attribute can be stored in the storage unit. An example of the storage unit includes an HDD.

In the present embodiment, when a job includes pages with the same attribute data, the control unit changes the page order such that the pages with the same attribute data become continuous pages. As a result, the pages with the same attribute data are continuous, and the efficiency can be improved.

In the present embodiment, when a plurality of image forming apparatuses are used to apply the image data to the parallel tandem output, the control unit generates a job such that a request for printing pages with the same attribute data is issued to the same image forming apparatus. As a result, the same image forming apparatus prints the pages including the same attribute data in the parallel tandem, and the efficiency can be improved.

In the present embodiment, the image data includes a master area and a variable area, and the attribute data belongs to the variable area. As a result, the master attribute can be excluded from the image data in the variable area to improve the efficiency.

In the present embodiment, the control unit makes the master area of the image data common, sets the image data of the variable area by excluding the master area, prepares a common master attribute for the image data of the variable area in at least part of the pages, for part or all of the attribute data in the image data of each page, incorporates the common master attribute into the attribute in the master area, and enables to use the master attribute and to use the image data excluding the individual attribute data according to the master attribute, in pages corresponding to the master attribute. As a result, the master attribute in the variable area is incorporated into the attribute in the master area, and the master attribute is excluded from the image data in the variable area. This can further improve the efficiency.

Although the present invention has been described based on the embodiment, the embodiment can be appropriately changed without departing from the scope of the present invention.

## Claims

1. An image forming apparatus (10) comprising an image forming unit that forms an image based on image data, **characterized by** comprising a control unit that manages the image data, wherein
the control unit (113,163) prepares a common master attribute in at least part of pages, for part or all of attribute data in the image data of each page, and enables to use the master attribute and to use image data excluding individual attribute data according to the master attribute, in pages corresponding to the master attribute.

2. The image forming apparatus (10) according to claim 1, wherein
when the attribute data is different in each page, the control unit (113,163) generates a predetermined attribute master and handles the generated attribute master as the master attribute.

3. The image forming apparatus (10) according to claim 1 or 2, wherein
the control unit (113,163) handles the attribute data of a first page as the master attribute.

4. The image forming apparatus (10) according to any one of claims 1 to 3, wherein
the control unit (113,163) makes the master attribute correspond to all pages in a same job.

5. The image forming apparatus (10) according to any one of claims 1 to 4, wherein
a use information field of the master attribute is provided in header information corresponding to the image data.

6. The image forming apparatus (10) according to any one of claims 1 to 5, wherein
when an image quality priority mode is selected in a job in which one of a performance priority mode and the image quality priority mode is set, the control unit (113; 163) handles common attribute data with a highest frequency of use among the attribute data of all pages as the master attribute, and for a page with attribute data different from the master attribute, the control unit uses individual attribute data of the page.

7. The image forming apparatus (10) according to any one of claims 1 to 6, wherein
when the performance priority mode is selected in a job in which one of the performance priority mode and the image quality priority mode is set, the control unit (113;163) sets a predetermined common attribute for the attribute data of all pages and handles the predetermined common attribute as the master attribute if the attribute data includes a text attribute.

8. The image forming apparatus (10) according to any one of claims 1 to 7, wherein
the control unit (113,163) sets a graphic attribute as the common attribute.

9. The image forming apparatus (10) according to any one of claims 1 to 8, wherein
the attribute data is one of graphics, images, and texts.

10. The image forming apparatus (10) according to any one of claims 1 to 9, further comprising
a storage unit (120,127) that stores the master attribute, the image data excluding the individual attribute data according to the master attribute, and the individual attribute data if the individual attribute data not corresponding to the master attribute is included.

11. The image forming apparatus (10) according to any one of claims 1 to 10, wherein
when a job includes pages with same attribute data, the control unit (113,163) changes a page order such that the pages with the same attribute data become continuous pages.

12. The image forming apparatus (10) according to any one of claims 1 to 11, wherein
when a plurality of image forming apparatuses are used to apply the image data to a parallel tandem output, the control unit generates a job such that a request for printing pages with same attribute data is issued to a same image forming apparatus.

13. The image forming apparatus (10) according to any one of claims 1 to 12, wherein
the image data includes a master area and a variable area, and the attribute data belongs to the variable area.

14. The image forming apparatus (10) according to claim 13, wherein
the control unit (113,163) makes the master area of the image data common, sets the image data of the variable area by excluding the master area, prepares a common master attribute for the image data of the variable area in at least part of the pages, for part or all of the attribute data in the image data of each page, incorporates the common master attribute into the attribute in the master area, and enables to use the master attribute and to use the image data excluding the individual attribute data according to the master attribute, in pages corresponding to the master attribute.

15. An image forming system(1) comprising an image forming unit that forms an image based on image data, **characterized by** comprising a control unit (113,163) that manages the image data, wherein
the control unit (113,163) prepares a common master attribute in at least part of pages, for part or all of attribute data in the image data of each page, and enables to use the master attribute and to use image data excluding individual attribute data according to the master attribute, in pages corresponding to the master attribute.

16. The image forming system (1) according to claim 15, comprising
a plurality of image forming apparatuses comprising the image forming unit, wherein
the control unit (113,163) has a parallel tandem output function using the plurality of image forming units, and when a job is to be output based on the parallel tandem output function, the control unit generates a job such that a request for printing pages with same attribute data is issued to a same image forming apparatus.

17. An image forming method of an image forming apparatus or an image forming system that forms an image based on image data, the image forming method comprising:
a step of preparing a common master attribute in at least part of pages, for part or all of attribute data in the image data of each page; and
a step of providing the master attribute and image data excluding individual attribute data according to the master attribute, in pages corresponding to the master attribute.

18. The image forming method according to claim 17 further comprising
a step of receiving the master attribute, the image data excluding the individual attribute data according to the master attribute, and the individual attribute data if the individual attribute data not corresponding to the master attribute is included, and using the master attribute as the attribute data in the pages corresponding to the master attribute to form the image.
